# EUROPEAN PATENT SPECIFICATION

(11) **EP 1 414 125 B1**
(45) Date of publication and mention of the grant of the patent: **01.06.2016**
(21) Application number: 03078350.0
(22) Date of filing: 23.10.2003
(51) Int. Cl.: H02G 3/04

(54) **DEVICE FOR RECEIVING LINES AND THE LIKE, AND METHOD FOR MANUFACTURE THEREOF**
VORRICHTUNG ZUR AUFNAHME VON KABELN UND HERSTELLUNGSVERFAHREN
DISPOSITIF DE RECEPTION DE CABLES ET METHODE DE FABRICATION

(30) Priority: 24.10.2002 NL 1021734
(43) Date of publication of application: 28.04.2004
(73) Proprietor: Van Geel Legrand B.V., 5281 RS Boxtel (NL)
(72) Inventor: Van Geel, Jacobus Antonius Peter, 5281 JT Boxtel (NL)
(74) Representative: Land, Addick Adrianus Gosling

(56) References cited:
- EP-A- 1 049 225
- DE-C- 10 000 849
- DE-U- 20 010 253

## Description

The invention relates to a device for accommodating cables and the like, consisting of a channel-like profile with substantially vertical side walls and at least one cover which can be clamped thereon, which profile and cover are at least partly formed from an electrically conductive material and are provided with an outer layer of less conductive material, wherein the outer layer is at least partly removed on respectively the channel-like profile and the or each cover at the position of a contact area between cover and channel-like profile. The invention further relates to a method for manufacturing such a device, wherein the channel-like profile and the or each cover are formed from an electrically conductive material.

Such a device is known for instance from DE 100 00849. This document describes a method for manufacturing such a device, wherein the cover and the channel-like profile are first covered with a powder coating, whereafter this powder coating is removed, for instance by brushing means, at the position of the locking contours between cover and profile. The powder coating is then burnt in. In this manner a device is obtained with which, in the closed position of the cover, an electrical contact is made between the cover and the channel-like profile. Such a method has the drawback that an additional operation, i.e. removal of a part of the coating, must be carried out between application of the powder coating and burning-in thereof, whereby the danger of contaminating dust particles in the coating is especially great if no expensive specific measures are taken. The thus obtained device furthermore has the drawback that, in the case of a clearance in the dimensions of the cover or the channel-like profile, the locking contours no longer lie properly against each other, whereby a good electrical contact is no longer ensured. EP 1049225 shows a channel with sharp tabs which remove the coating of a cover when said cover is placed.

The manufacture of channels for accommodating for instance electricity, telephone and computer cables is generally known. For such channels it is often a legal requirement to connect these to a safety earth wire, which makes it possible to switch off the electricity as soon as the channel becomes electrically charged due to a defect. This can take place for instance by means of a fuse or an earth leakage switch. Because the covers of these channels could also become electrically charged due to a defect, it is important that there is a good electrical contact between the channel-like profile and the cover fitting thereon.

The invention has for its object to provide a device and method of the type stated in the preamble for manufacturing such a device, wherein a good electrical contact between the channel-like profile and the cover is ensured, even when there is a certain clearance present in the dimensions of the cover and/or the channel-like profile part.

To this end the device according to the invention is distinguished in that a longitudinal edge of each cover is provided with a cover flange having a first shoulder with a substantially vertical clamping face, and that an upper longitudinal edge of the channel-like profile is provided with an inward directed channel flange having a second shoulder with a substantially vertical clamping face, from which clamping faces at least the outer layer is removed such that in the closed position of the cover an electrical contact is brought about between cover and channel-like profile. In this manner an electrical voltage on the cover will also result in an electrical current through the earth wire connected to the channel-like profile.

Owing to the removal of the outer layer the considerable electrical resistance between cover and channel disappears, and a sufficiently large electrical current is caused by an electrical voltage on the cover to switch off for instance the earth leakage switch or to cause melting of the fuse, which is necessary for safety reasons. A good electrical contact is provided at all times by providing the flanges of the cover and the channel-like profile respectively with a shoulder with clamping faces. Slightly more than the outer layer can moreover also be removed and a fixed closing distance between two clamping surfaces can be realized, even when there is some clearance in the dimensions of the cover and/or the channel-like part.

According to a preferred embodiment of the invention, the cover and the channel-like profile are provided with first and second locking strips which are arranged at a distance from respectively the first and second shoulder. These locking strips are preferably arranged such that they do not disrupt proper operation of the clamping faces. In the closed position the locking strips can for instance lie at some distance from each other, so that only the clamping faces lie clampingly against each other, and this good clamping action is not adversely affected by the presence of locking strips.

According to a first variant the channel-like profile of the device according to the invention has a substantially U-shaped cross-section. The channel and the or each cover can however also have a random other shape. The channel-like profile can thus for instance also have an E- or H-shaped cross-section, on each of which fit two covers.

According to an embodiment of the invention, the channel-like profile can further be connected to an earth wire for safety reasons. An electrician at a building site will have to arrange and connect this wire to the channel-like profiles.

If the channel-like profile and the cover are manufactured from an aluminium alloy, they are generally provided with an outer layer which can be a powder coating and/or anodizing layer. Such an anodizing layer is obtained by converting the outer aluminium layer into a high-grade aluminium oxide layer.

The invention further relates to a method for manufacturing a device according to the invention, wherein the channel-like profile and the or each cover are formed from an electrically conductive material. The method is distinguished in that a finished outer layer is first arranged on the whole of the channel-like profile and each cover, and that the outer layer is then removed on the clamping faces.

In this manner a classic installation can be used to apply an outer layer, such as for instance an installation for applying a powder coating and burning-in thereof immediately thereafter. The danger of contamination by dust particles is hereby kept small compared to for instance the above described method of DE 100 00849.

In an embodiment of the method according to the invention, the outer layer is removed by a machining operation, which can for instance be a planing or milling operation. This is a simple and inexpensive process for obtaining a good contact between cover and profile.

By giving the milling machines a fixed position relative to the centre of the cover/channel profile, a fixed closing distance can be obtained and a layer of greater or lesser thickness will thus be milled, depending on the extent of the variations in the dimensions of the cover/channel profile.

According to the preferred method of the invention, the channel-like profile and the cover are formed by extrusion of an aluminium alloy. This has the advantage that there is a great freedom of design in respect of the shape of the cross-section.

The device according to the invention can further have a channel-like profile that can be provided with switch material, such as electrical wall sockets and the like, which can be arranged in the for instance substantially U-shaped profile. To this end the U-shaped profile is provided for instance on the inside with a number of protruding ribs which form support points, for instance for an electrical wall socket.

According to the device of the invention, one or more covers can be further provided with one or more recesses, for instance in order to make the switch material present in the channel-like profile accessible.

According to a further embodiment of the invention, the channel-like profile can be provided with one or more fixing means. The profile can for instance be provided with brackets, from which it is suspended. The profile can for instance also be equipped with a support for an upright placing of the profile.

Subject to the intended installation, the channel-like profile can be provided with an axial seal for sealing the channel, or with coupling members for mutually connecting different profiles. Such coupling members can for instance be corner, cross or T-pieces, with which the channel profiles can be installed in a random pattern in for instance office spaces.

The invention is further elucidated with reference to the annexed drawing and the figure description hereinbelow, which illustrate a number of non-limitative embodiments of the device and method according to the invention.

In the drawing:
- figure 1 shows a perspective view of a first embodiment of the device according to the invention;
- figure 2 shows a perspective view of a second embodiment of the device according to the invention;
- figure 3 shows a schematic representation of the removal of the outer layer according to the method of the invention.

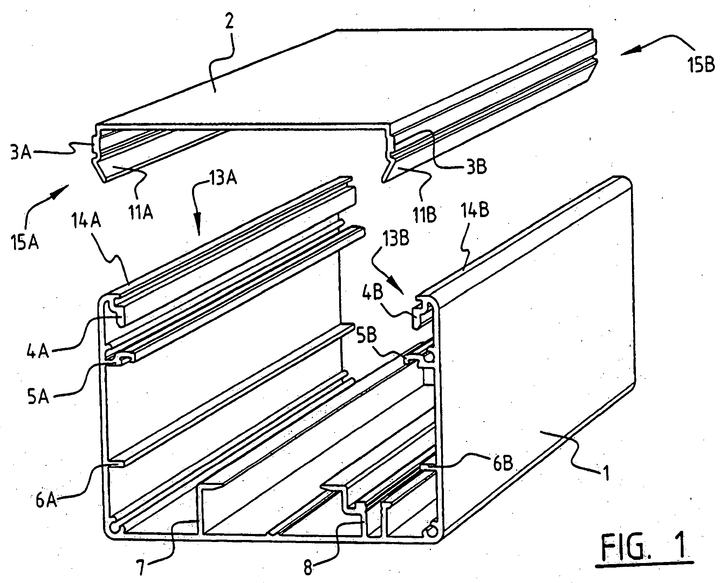

Figure 1 shows a channel-like profile 1 which is provided at the top with two inward turned edges 14A, 14B which are provided with channel flanges 13A, 13B. Each channel flange 13A, 13B is provided with a shoulder 4A, 4B with a substantially vertical clamping face. A cover 2 can be arranged clampingly on this channel-like profile. Cover 2 is embodied for this purpose with two downward directed cover flanges 15A, 15B having in each case a shoulder 3A, 3B with a substantially vertical clamping face against which the shoulders 4A and 4B of the channel flange press when cover 2 is placed clampingly on channel-like profile 1.

The cross-section of such a profile can take all possible forms, and can be provided where necessary with protruding ribs formed in a particular manner, such as 5A, 5B, 6A, 6B, for receiving for instance installation material or compartment partitions. The top side of ribs 5A, 5B and the bottom side of channel flanges 13A, 13B form together with locking strips 11A, 11B the locking means between cover 2 and profile 1.

The channel-like profile can be provided at the bottom of the interior with for instance two L-shaped protruding parts 7 for accommodating a determined type of mounting socket, or ribs 8 for attaching an earth wire.

Such channel-like profiles are suitable for accommodating a large quantity of different wiring, and can be equipped with means for accommodating for instance flat cables, coaxial cables and so on.

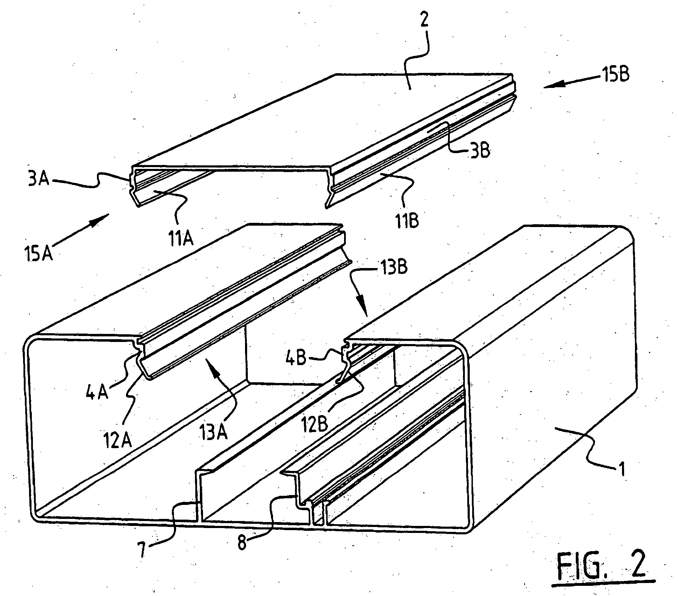

Figure 2 shows a second embodiment of a device according to the invention, which is similar to the embodiment of figure 1, but wider. Note that the same covers can be used for different types of profile.

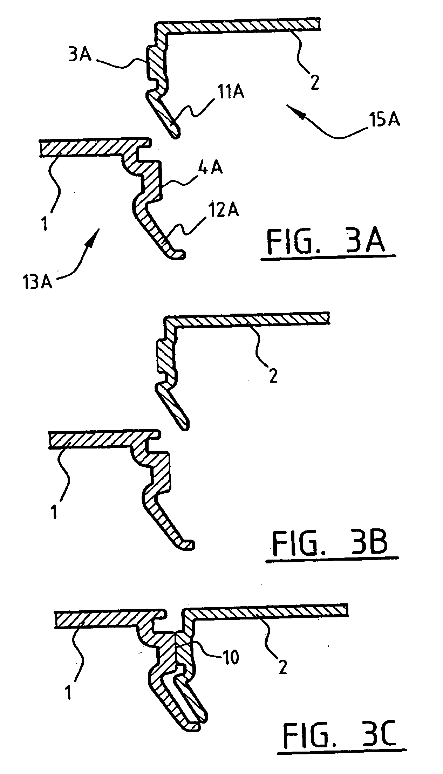

Figure 3 illustrates schematically the method according to the invention. After extrusion of cover 2 and channel-like profile 1, both are provided with a protective outer layer 9, which can be for instance an anodizing layer and/or a powder coating as shown in figure 3A.

This layer is removed locally at the position of the clamping faces of the first shoulder 3A and second shoulder 4A, for instance by milling, which produces the result shown in figure 3B. As shown in figure 3C, the internal, efficiently conductive material of the cover makes direct contact with the internal, efficiently conductive material of the channel-like profile. Locking strips 11A, 12A are moreover formed such that in the locked situation they lie at a mutual distance, and do not obstruct the clamping action of shoulder 3A on shoulder 4A. If the cover is for instance slightly too wide, slightly more material can be cut from the shoulders such that a good contact surface is ensured. The thinner shoulders will herein have the result that locking strips 11A, 12A lie slightly closer together, but without the good contact between clamping faces 11 being hindered.

Note that the substantially vertical clamping faces 10 can also lie slightly obliquely and/or can have a slightly round profile so as to obtain an even better contact in particular embodiments.

The scope of protection of the invention is not limited to the above illustrated embodiments, but is defined by the following claims.

## Claims

1. Device for accommodating cables and the like consisting of a channel-like profile (1) with substantially vertical side walls and at least one cover (2) which can be clamped thereon, which profile and cover are at least partly formed from an electrically conductive material and are provided with an outer layer of less conductive material, wherein the outer layer is at least partly removed on respectively the channel-like profile and the or each cover at the position of a contact area between cover and channel- like profile, an upper longitudinal edge of the channel-like profile (1) is provided with an inward directed channel flange (13A,13B) having a second shoulder (4A,4B) with a substantially vertical clamping face, **characterized in that** a longitudinal edge of each cover (2) is provided with a cover flange (15A,15B) having a first shoulder (3A, 3B) with a substantially vertical clamping face, from which clamping faces at least the outer layer is removed such that in the closed position of the cover an electrical contact is brought about between cover and channel-like profile.

2. Device as claimed in claim 1, **characterized in that** the or each cover (2) and the channel-like profile (1) are provided with first and second locking strips (11A,11B;12A,12B) which are arranged at a distance from respectively the first shoulder (3A,3B) and the second shoulder (4A,4B).

3. Device as claimed in either of the foregoing claims, **characterized in that** the outer layer is a coating and/or anodizing layer.

4. Device as claimed in any of the foregoing claims, **characterized in that** the channel-like profile is provided with switch material, such as electrical wall sockets and the like.

5. Device as claimed in any of the foregoing claims, **characterized in that** the channel-like profile is provided with one or more fixing means.

6. Method for manufacturing a device as claimed in any of the foregoing claims, wherein the channel-like profile and the or each cover are formed from an electrically conductive material, **characterized in that** a finished outer layer is first arranged on the whole of the channel-like profile (1) and each cover (2), and that the outer layer is then removed on the clamping faces of the first and second shoulder (3A,38;4A,4B).

7. Method as claimed in claim 6, **characterized in that** the outer layer is removed by a machining operation.

8. Method as claimed in claim 6 or 7, **characterized in that** the outer layer is removed by milling.

9. Method as claimed in any of the claims 6-8, **characterized in that** the channel-like profile and the cover are formed by extrusion.

10. Method as claimed in any of the claims 6-9, **characterized in that** the channel-like profile and the cover are formed from an aluminium alloy.

## Patentansprüche

1. Vorrichtung zur Aufnahme von Kabeln und dergleichen mit einem kanalähnlichen Profil (1) mit im wesentlichen vertikalen Seitenwänden und mindestens einer Abdeckung (2), die darauf geklemmt werden kann, wobei das Profil und die Abdeckung zumindest teilweise aus einem elektrisch leitfähigen Material gebildet sind und mit einer äußeren Schicht aus weniger leitfähigem Material versehen sind, wobei die äußere Schicht zumindest teilweise von dem jeweiligen kanalähnlichen Profil und der oder jeder Abdeckung in der Position einer Kontaktfläche zwischen der Abdeckung und dem kanalähnlichen Profil entfernt ist, wobei eine obere Längskante des kanalähnlichen Profils (1) mit einem nach innen gerichteten Kanalflansch (13A, 13B) mit einer zweiten Schulter (4 A, 4 B) mit einer im wesentlichen vertikalen Klemmfläche versehen ist, **dadurch gekennzeichnet, dass** eine Längskante jeder Abdeckung (2) mit einem Deckflansch (15A, 15B) mit einer ersten Schulter (3A, 3B) mit einer im wesentlichen vertikalen Klemmfläche versehen ist, wobei von den Klemmflächen zumindest die äußere Schicht so entfernt ist, dass in der verschlossenen Position der Abdeckung ein elektrischer Kontakt zwischen der Abdeckung und dem kanalähnlichen Profil hergestellt wird.

2. Vorrichtung nach Anspruch 1, **dadurch gekennzeichnet, dass** die oder jede Abdeckung (2) und das kanalähnliche Profil (1) mit ersten und zweiten Sperrstreifen (11A, 11B; 12A, 12B) versehen sind, die in einem Abstand von jeweilig der ersten Schulter (3A, 3B) und der zweiten Schulter (4 A, 4 B) angeordnet sind.

3. Vorrichtung nach einem der vorstehenden Ansprüche, **dadurch gekennzeichnet, dass** die äußere Schicht eine Beschichtung und/oder eine Eloxalschicht ist.

4. Vorrichtung nach einem der vorstehenden Ansprüche, **dadurch gekennzeichnet, dass** das kanalähnliche Profil mit Schaltmaterial wie elektrischen Wandsockeln und dergleichen versehen ist.

5. Vorrichtung nach einem der vorstehenden Ansprüche, **dadurch gekennzeichnet, dass** das kanalähnliche Profil mit einem oder mehreren Befestigungsmitteln versehen ist.

6. Verfahren zur Herstellung einer Vorrichtung nach einem der vorstehenden Ansprüche, bei denen das kanalähnliche Profil und die oder jede Abdeckung aus einem elektrisch leitfähigen Material gebildet werden, **dadurch gekennzeichnet, dass** eine fertige äußere Schicht zunächst auf dem gesamten kanalähnlichen Profil (1) und jeder Abdeckung (2) ausgebildet wird und dass dann die äußere Schicht auf den Klemmflächen der ersten und der zweiten Schulter (3A, 3B; 4A, 4B) entfernt wird.

7. Verfahren nach Anspruch 6, **dadurch gekennzeichnet, dass** die äußere Schicht durch einen Bearbeitungsvorgang entfernt wird.

8. Verfahren nach Anspruch 6 oder 7, **dadurch gekennzeichnet, dass** die äußere Schicht durch Fräsen entfernt wird.

9. Verfahren nach einem der Ansprüche 6-8, **dadurch gekennzeichnet, dass** das kanalähnliche Profil und die Abdeckung durch Extrusion gebildet werden.

10. Verfahren nach einem der Ansprüche 6-9, **dadurch gekennzeichnet, dass** das kanalähnliche Profil und die Abdeckung aus einer Aluminiumlegierung gebildet sind.

## Revendications

1. Dispositif destiné à contenir des câbles ou autres, consistant en un profilé en forme de canal (1) avec des parois latérales sensiblement verticales et au moins un couvercle (2) qui peut être bloqué sur celui-ci, lesquels profilé et couvercle sont au moins partiellement formés en un matériau électriquement conducteur et comportent une couche externe de matériau moins conducteur, dans lequel la couche externe est au moins partiellement retirée respectivement sur le profilé en forme de canal et le ou chaque couvercle à la position d'une zone de contact entre couvercle et profilé en forme de canal, un bord longitudinal supérieur du profilé en forme de canal (1) comporte une bride de canal dirigée vers l'intérieur (13A, 13B) comportant un second épaulement (4A, 4B) avec une face de blocage sensiblement verticale, **caractérisé en ce qu**'un bord longitudinal de chaque couvercle (2) comporte une bride de couvercle (15A, 15B) comportant un premier épaulement (3A, 3B) avec une face de blocage sensiblement verticale, à partir desquelles faces de blocage au moins la couche externe est retirée de telle sorte que dans la position fermée du couvercle un contact électrique est assuré entre le couvercle et le profilé en forme de canal.

2. Dispositif selon la revendication 1, **caractérisé en ce que** le ou chaque couvercle (2) et le profilé en forme de canal (1) sont équipés de première et seconde bandes de blocage (11A, 11B ; 12A, 12B) qui sont agencées à une certaine distance respectivement par rapport au premier épaulement (3A, 3B) et au second épaulement (4A, 4B).

3. Dispositif selon l'une quelconque des revendications précédentes, **caractérisé en ce que** la couche externe est un revêtement et/ou une couche d'anodisation.

4. Dispositif selon l'une quelconque des revendications précédentes, **caractérisé en ce que** le profilé en forme de canal est équipé de matériel de commutation, tel que des prises électriques murales ou autres.

5. Dispositif selon l'une quelconque des revendications précédentes, **caractérisé en ce que** le profilé en forme de canal comporte un ou plusieurs moyens de fixation.

6. Procédé de fabrication d'un dispositif selon l'une quelconque des revendications précédentes, dans lequel le profilé en forme de canal et le ou chaque couvercle sont formés en un matériau électriquement conducteur, **caractérisé en ce qu**'une couche externe finie est d'abord agencée sur la totalité du profilé en forme de canal (1) et de chaque couvercle (2) et en ce que la couche externe est ensuite retirée sur les faces de blocage des premier et second épaulements (3A, 3B ; 4A, 4B).

7. Procédé selon la revendication 6, **caractérisé en ce que** la couche externe est retirée par une opération d'usinage.

8. Procédé selon la revendication 6 ou 7, **caractérisé en ce que** la couche externe est retirée par fraisage.

9. Procédé selon l'une quelconque des revendications 6 à 8, **caractérisé en ce que** le profilé en forme de canal et le couvercle sont réalisés par extrusion.

10. Procédé selon l'une quelconque des revendications 6 à 9, **caractérisé en ce que** le profilé en forme de canal et le couvercle sont réalisés en un alliage d'aluminium.
